# EUROPÄISCHE PATENTSCHRIFT

(11) **EP 0 332 967 B1**
(45) Veröffentlichungstag und Bekanntmachung des Hinweises auf die Patenterteilung: **16.02.1994**
(21) Anmeldenummer: 89103870.5
(22) Anmeldetag: 06.03.1989
(51) Int. Cl.: C08G 69/48, C08G 73/02, D21H 17/55

(54) **Polyamidamin-Harze**
Polyamide amine resin
Résine polyamido-amine

(30) Priorität: 16.03.1988 DE 3808741
(43) Veröffentlichungstag der Anmeldung: 20.09.1989
(73) Patentinhaber: BAYER AG, 51368 Leverkusen (DE)
(72) Erfinder: Bachem, Henning, Dr., D-5000 Köln 80 (DE); Muszik, Janos, Dr., D-5090 Leverkusen 1 (DE); Reiners, Jürgen, Dr., D-5090 Leverkusen 1 (DE); Süling, Carlhans, Dr., D-5068 Odenthal (DE); Schröer, Wolf-Dieter, Dr., D-8000 München 71 (DE)

(56) Entgegenhaltungen:
- EP-A- 0 131 200
- EP-A- 2 949 870
- US-A- 3 951 921

## Beschreibung

Die Erfindung betrifft kationaktive, vernetzbare Polyamidamin-Harze, die durch Umsetzung von
A) einem wasserlöslichen Polyamidamin, mit Basenäquivalentgewichten von 450 bis 1.000, bevorzugt 500 bis 1.000 und einem Molekulargewicht von mindestens 800, hergestellt aus
   1) aliphatischen gesättigten oder olefinisch ungesättigten oder aromatischen Dicarbonsäuren mit 2 bis 12 C-Atomen oder deren Anhydriden, Estern oder Halbestern und gegebenenfalls 3 bis 6 C-Atomen enthaltende ω-Aminocarbonsäuren oder deren Lactamen
   und
   2) einen Polyamin-Gemisch aus
      α) Polyaminen der Formeln 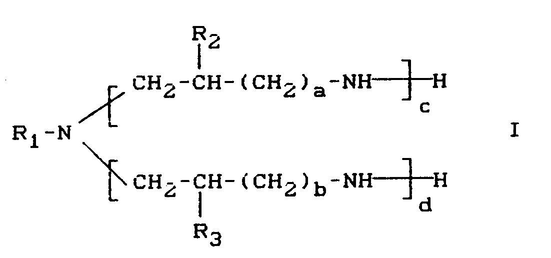 und gegebenenfalls 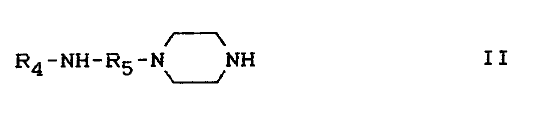 im Molverhältnis von
         I:II = 4-100:0-1,
         und
      β) Polyaminen der Formel 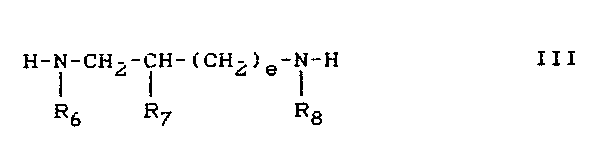 worin
         R₁, R₆ und R₈ unabhängig voneinander für Wasserstoff oder C₁-C₄-Alkyl,
         R₂, R₃, R₄ und R₇ unabhängig voneinander für Wasserstoff, Methyl oder Ethyl,
         R₅ für C₂-C₄-Alkylen,
         a, b und e unabhängig voneinander für eine ganze Zahl von 0 bis 4 und
         c und d unabhängig voneinander für eine ganze Zahl von 1 bis 6 stehen,
         im Molverhältnis von
         α:β = 1-25:1
      im Molverhältnis von
      1:2 = 0,8-1,2:1,
mit
B) einem Epihalogenhydrin und gegebenenfalls gleichzeitige oder anschließende Umsetzung mit einem Polyamin A2) im Molverhältnis von 0,7 bis 3,5 Mol Epihalogenhydrin pro Mol Basenstickstoff der Komponente A),
gleichzeitiger oder nachfolgender Umsetzung mit
C) einer anorganischen Base im Molverhältnis von 0,2 bis 2,0 Mol Base pro Mol Epihalogenhydrin-Gruppe, bei einer Temperatur von 15 bis 95°C, unter Einstellung eines pH-Wertes von 8 bis 14
und anschließender Umsetzung des erhaltenen Produktes mit
D) 0,2 bis 9,0 Mol einer halogenfreien Mineral- oder Carbonsäure, bzw. einem sauer reagierenden Derivat dieser Säuren, pro Mol Basenstickstoff der Komponente A, bei einer Temperatur von 15 bis 95°C, wobei mindestens so viel Säure zugefügt wird, daß ein pH-Wert von maximal 5 erreicht wird,
erhältlich sind, ihre Herstellung und ihre Verwendung als Naßfestmittel zur Ausrüstung von Papier.

Vernetzbare, Halogenhydrin-Gruppen enthaltende Umsetzungsprodukte von Polyaminen und Polyamidaminen mit Epihalogenhydrin und ihre Verwendung zur Naßfestausrüstung von Papier sind bekannt. Sie werden vor allem bei der Papierherstellung im Neutralbereich von pH 6-8 eingesetzt.

So werden beispielsweise in den deutschen Offenlegungsschriften 22 29 219, 22 57 271 und 29 38 588, den deutschen Patentschriften 17 20 905, 17 71 043 und 19 06 450, den europäischen Patentanmeldungen 0 131 200 und 0 126 176 und den US-Patentschriften 29 26 154 und 33 32 901 selbstvernetzende, wasserlösliche Reaktions produkte aus Epihalogenhydrinen und basischen Polyamidaminen oder Polyaminen bzw. Gemischen hieraus beschrieben, wobei jeweils ein Überschuß an Epihalogenhydrin pro Äquivalent an basischen Aminogruppen verwendet wird.

Aus den deutschen Offenlegungsschriften 15 95 302 und 19 06 561 sind wasserlösliche Kondensationsprodukte aus ε-Caprolactam, Polyaminen, Polyamidaminen und Epichlorhydrin bekannt.

Aus US 3 951 921 sind Retentionsmittel für Papierfüllstoffe bekannt, die durch Umsetzung bestimmter Harze mit Stickstoffverbindungen hergestellt werden können.

Aus DE-A 2 949 870 sind Naßfestmittel aus selbstvernetzenden, wasserlöslischen Reaktionsprodukten bekannt, die durch Umsetzung von Polyamidaminen und Polyaminen mit Epichlorhydrin hergestellt werden können, wobei pro Mol basischer Aminogruppen 1,5 bis 2 Mol Epichlorhydrin eingesetzt wird.

Bisher in der Praxis eingesetzte Naßfestmittel weisen einen hohen Gehalt an Halogenhydrin-Gruppen auf. Diese sind bei der Verwendung als Naßfestmittel zur Einstellung hoher mechanischer Festigkeiten notwendig.

Bei der Verwendung als Naßfestmittel in der Papierherstellung erfolgt jedoch eine unvollständige Reaktion mit der Cellulosefaser. Dadurch gelangen Anteile der Produkte unumgesetzt in das Abwasser und tragen zu dessen Belastung mit organisch gebundenem Halogen bei.

Aufgabe der vorliegenden Erfindung war es, kationaktive, vernetzbare Polyamidamin-Harze herzustellen, die im pH-Bereich ≧6 vernetzbar und den gebräuchlichen Epihalogenhydrin-Harzen in der Naßfestwirkung vergleichbar sind und außerdem deutlich weniger organisch gebundenes Halogen enthalten.

Es wurde gefunden, daß durch die erfindungsgemäße Behandlung von Halogenhydrin-Gruppen-haltigen Verbindungen kationaktive, vernetzbare Produkte mit erheblich weniger organisch gebundenem Halogen erhalten werden, die hervorragend die Naßfestigkeit eines hiermit ausgerüsteten Papieres verbessern.

Außerdem wurde gefunden, daß bei Verwendung von Polyamidaminen mit bis zu 50 Mol-% an Polyamid-Struktureinheiten besonders niedrige Halogengehalte und sehr gute Naßfestigkeiten einstellbar sind.

Die polymeren Verbindungen haben vorzugsweise ein Molekulargewicht von 2.000 bis 200.000 (Gewichtsmittel).

Bei einem Feststoffgehalt von 5 bis 30 Gew.-%, vorzugsweise 10 bis 25 Gew.-%, weisen die wäßrigen oder wäßrigorganischen Lösungen oder Emulsionen eine Viskosität von 15 bis 300 mPas, vorzugsweise 20 bis 250 mPas, bei 25°C auf.

Die 15 gew.-%igen wäßrigen, gegebenenfalls ein polares Lösungsmittel enthaltenden Lösungen oder Emulsionen der kationaktiven, vernetzbaren Polyamidamin-Harze weisen einen organischen Halogen-Gehalt von 0,01 bis 0,5 Gew.-% auf.

Die Herstellung der erfindungsgemäßen Polyamidamin-Harze erfolgt bevorzugt im wäßrigen Medium. Es können auch Gemische von Wasser mit anderen polaren Lösungsmitteln wie Methanol, Ethanol, Isopropanol, tert.-Butanol, Ethylenglykol, Diethylenglykol, Triethylenglykol, Polyethylenglykol, Glycerin oder Dimethylformamid verwendet werden.

Die Umsetzung der Ausgangskomponenten A und B erfolgt in bekannter Weise. Man rührt hierbei wäßrige oder wäßrig-organische Lösungen bzw. Emulsionen mit Feststoffgehalten von etwa 10 bis 40 Gew.-% bei Temperaturen von 25 bis 95°C, vorzugsweise 35 bis 90°C.

In einer bevorzugten Ausführungsform wird bereits während der Umsetzung von A und B bei Temperaturen von 15 bis 95°C, vorzugsweise 20 bis 70°C, und einer Mindestviskosität von 10 mPas, mit einer Base umgesetzt. Hierbei werden pH-Werte von 8 bis 14, vorzugsweise 8,5 bis 12, eingestellt.

Hierbei wird freie oder gebundene Säure neutralisiert und eine teilweise Epoxydierung der vorhandenen Halogenhydrin-Gruppen unter Salzbildung bewirkt.

Unter Beibehalt der obengenannten basischen pH-Werte und gegebenenfalls Zugabe von Lösungsmittel wird das Reaktionsgemisch dann 10 Minuten bis 10 Stunden, vorzugsweise 15 Minuten bis 8 Stunden, bei 15 bis 95°C, vorzugsweise 20 bis 70°C, gerührt.

Bei dieser Temperatur wird in der Reaktionsstufe D) mit so viel Säure oder Säure-Derivat versetzt, daß pH-Werte ≦5,0, bevorzugt 1,5 bis 4,5, erreicht werden.

In einer anderen Ausführungsform ist eine Zwischen-Isolierung der Umsetzungsprodukte A/B und nachfolgende Umsetzung zu den Produkten C) und D) möglich.

Die Umsetzung der Ausgangskomponenten A und B erfolgt zunächst analog. Man rührt dabei so lange, bis eine Probe der Reaktionsmischung in Form einer 15 %igen wäßrigen oder wäßrig-organischen Lösung bzw. Emulsion eine Viskosität von 15 bis 300 mPas, vorzugsweise 20 bis 250 mPas, bei 25°C aufweist. Danach setzt man dem viskosen Gemisch zur Beendigung der Einwirkung und zur Stabilisierung der selbstvernetzenden Produkte Säuren zu, daß der pH-Wert bei 1,5 bis 5 liegt. Als stabilisierende Säuren sind insbesondere die nachstehend aufgeführten geeignet. Im nächsten Reaktionsschritt werden die Zwischenprodukte A/B mit Hilfe einer Base bei Temperaturen von 15 bis 95°C, vorzugsweise 20 bis 70°C, auf pH-Werte von 8 bis 14, vorzugsweise 8,5 bis 12, eingestellt. Anschließend wird wie beschrieben verfahren.

Als Base seien vor allem genannt:
LiOH, Ca(OH)₂, Ba(OH)₂, Sr(OH)₂, Na₂CO₃, K₂CO₃, Na₃PO₄, K₃PO₄ und besonders KOH und NaOH oder Gemische hieraus.

Als Säuren oder Säure-Derivate sind zu nennen:
1. halogenfreie Mineralsäuren bzw. sauer reagierende Derivate dieser Säuren, wie Amidosulfonsäuren, schweflige Säure, Kieselsäure, Borsäure, Salpetersäure, Kohlensäure und besonders Schwefelsäure, Phosphorsäure und Alkalihydrogensulfate,
2. halogenfreie, gegebenenfalls Hydroxygruppen enthaltende, Mono- oder Polycarbonsäuren bzw. Derivate dieser Säuren, wie Essigsäure, Essigsäureanhydrid, Propionsäure, Oxalsäure, Malonsäure, Bernsteinsäure, Glutarsäure, Adipinsäure, Maleinsäure, Milchsäure, Weinsäure, Glykolsäure und besonders Ameisensäure, Äpfelsäure und Citronensäure
oder Gemische hieraus.

Durch Verdünnen mit Wasser und/oder Lösungsmittel wird der Feststoffgehalt der Produkte danach auf den gewünschten Wert festgelegt.

Als Dicarbonsäuren A 1) seien genannt:
Oxalsäure, Malonsäure, Bernsteinsäure, Glutarsäure, Adipinsäure, Azelainsäure, Sebacinsäure, 1,12-Dodecandisäure, Itaconsäure, Terephthalsäure und Isophthalsäure.

Als Polyamin (I) und (II) seien erwähnt:
Diethylentriamin, Triethylentetramin, Tetraethylenpentamin, Pentaethylenhexamin, Hexaethylenheptamin, Heptaethylenoctamin, Dipropylentriamin, Tripropylentetramin, Methyl-bis-(3-aminopropyl)-amin, Dihexamethylentriamin, Aminoethylpiperazin oder Gemische hieraus.

Als Diamine (III) sind bevorzugt:
Ethylendiamin, N,N'-Dimethyl-ethylendiamin, N-Methylethylendiamin, 1,2-Diaminopropan, 1,3-Diaminopropan, N,N'-Dimethyl-1,3-diaminopropan, N-Methyl-1,3-diaminopropan, N,N-Dimethyl-1,3-diaminopropan und 1,6-Diaminohexan oder Gemische hieraus.

Bevorzugtes Lactam ist ε-Caprolactam.

Bevorzugtes Beispiel für B) ist Epichlorhydrin.

Auf die beschriebene Weise werden unter technisch einfachen und gut handhabbaren Bedingungen klare, über Monate, vorzugsweise 3 bis 9 Monate, auch bei einem hohen Feststoffgehalt von bis zu 30 Gew.-% lagerstabile, vorzugsweise wäßrige, Lösungen oder Emulsionen erhalten, die hervorragend die Naßfestigkeit eines hiermit ausgerüsteten Papieres verbessern.

Die erfindungsgemäßen vernetzbaren Polyamidamin-Harze unterscheiden sich von bekannten Polyamin-Epihalogenhydrin Umsetzungsprodukten hinsichtlich ihres Gehaltes an organisch gebundenem Halogen und des AOX-Wertes (= adsorbierbares organisches Halogen).

So ist es möglich, daß der organische Halogengehalt der erfindungsgemäßen Verbindungen und der AOX-Wert um 60 bis 98 %, vorzugsweise 70 bis 95 %, niedriger als bei den bekannten Polyamin-Polyamidamin/Epihalogenhydrin-Umsetzungsprodukten liegt.

Weiterhin werden durch den Einbau von bis zu 50 Mol-% an Polyamid-Struktureinheiten in die Polyamidamin-Vorprodukte deutlich schwächer basische Vorprodukte mit Basenäquivalentgewichten ≧450, bevorzugt 500 bis 1.000, erhalten.

Die Ausrüstung des Papieres mit den erfindungsgemäßen Polymeren erfolgt in bekannter Weise. Bevorzugt werden die Polymeren in Form wäßriger Lösungen oder Emulsionen der Suspension des Papierrohstoffes zugesetzt, die dann zu Papier verarbeitet wird.

Die Zugabemengen liegen je nach gewünschtem Effekt zwischen 0,5 bis 4,0 Gew.-% der Lösung oder Emulsion (bezogen auf Papierrohstoff) mit einem Wirkstoffgehalt von 10 bis 25 Gew.-%. Bei besonders hohen Anforderungen an die Naßfestigkeit, z.B. bei Laminatpapieren mit hohem Aschegehalt und niedrigem Flächengewicht, können Zusatzmengen von 6 Gew.-% und mehr erforderlich sein.

### Beispiel 1

a) In eine Vorlage aus 113 g Diethylentriamin und 60 g Ethylendiamin gibt man 292 g Adipinsäure; hierbei steigt die Innentemperatur des Gemisches auf 135°C an. Man erhitzt danach bei 140-150°C für 30 Minuten am Rückfluß und heizt dann unter gleichmäßiger Destillatabnahme in 3 Stunden auf 193°C auf.
Jetzt kühlt man die Schmelze auf 160°C ab und setzt vorsichtig 390 ml Wasser zu. Das Produkt geht langsam in Lösung und wird noch 2 Stunden bei 95-100°C nachgerührt.

| | |
|---|---|
| Viskosität | 395 mPas (25°C) |
| Feststoffgehalt | 48,9 Gew.-% |
| Basenäquivalentgewicht | 531 g/Val bas. N |

b) Zu einer Vorlage aus 335 g eines Vorproduktes gemäß Beispiel 1a) und 568 ml Wasser tropft man bei 25-30°C in 30 Minuten 56,5 g Epichlorhydrin und rührt 30 Minuten nach.
Danach erhitzt man das Reaktionsgemisch unter Rühren auf 75°C und verdünnt bei steigender Viskosität mit 630 ml Wasser. Gleichzeitig kühlt man auf 50-60°C ab und stellt mittels einer 45 %igen NaOH-Lösung pH:10 ein. Unter pH-Konstanz rührt man dann bis zur gewünschten Viskosität weiter und setzt dann mit einer Schwefelsäure-Lösung um, wobei der pH-Wert bei 2,5 liegt.

| | |
|---|---|
| Viskosität | 55 mPas (25°C) |
| Feststoffgehalt | 15,0 Gew.-% |
| organ. Cl-Gehalt | 0,16 Gew.-%. |

### Beispiel 2

a) Zu einer Vorlage aus 123,6 g Diethylentriamin, 51,0 g Ethylendiamin und 113 g ε-Caprolactam setzt man 292,0 g Adipinsäure zu und erhitzt 45 Minuten am Rückfluß.
In 3 Stunden heizt man dann auf 197°C, wobei gleichmäßig Wasser abdestilliert. Nun wird die Schmelze auf 165°C abgekühlt und man setzt 500 ml Wasser zu. Danach rührt man die Lösung noch 1 Stunde bei 90°C nach.

| | |
|---|---|
| Viskosität | 378 mPas (25°C) |
| Feststoffgehalt | 49,9 Gew.-% |
| Basenäquivalentgewicht | 563. |

b) Man legt 563 g eines Vorproduktes gemäß Beispiel 2a) im Gemisch mit 940 ml Wasser vor und fügt 97,0 g Epichlorhydrin zu.
Im Anschluß wird auf 70°C erhitzt und bei steigender Viskosität mit 1350 ml Wasser versetzt. Hierbei kühlt das Reaktionsgemisch etwas ab und man gibt gleichzeitig so viel einer NaOH-Lösung zu, daß der pH-Wert bei 10 liegt. Unter Beibehalt des alkalischen pH-Wertes rührt man nun bis zur pH-Konstanz nach und stellt den pH-Wert dann mit HCOOH auf pH: 3,0 ein.

| | |
|---|---|
| Viskosität | 74 mPas (25°C) |
| Feststoffgehalt | 15,0 Gew.-% |
| organ. Cl-Gehalt | 0,15 %. |

### Beispiel 3

a) Zu einer Vorlage aus 120 g Diethylentriamin, 51 g Ethylendiamin und 226 g ε-Caprolactam fügt man 292 g Adipinsäure zu und erhitzt das Gemisch 1 Stunde am Rückfluß.
Anschließend heizt man in 3 Stunden auf 199°C auf und destilliert das entstehende Reaktionswasser gleichmäßig ab. Die Polyamidamin-Schmelze wird nun auf 165°C abgekühlt und in 600 ml Wasser gelöst. Die klare, gelbliche Lösung wird jetzt noch 1 Stunde bei 90-95°C nachgerührt.

| | |
|---|---|
| Viskosität | 410 mPas (25°C) |
| Feststoffgehalt | 49,4 Gew.-% |
| Basenäquivalentgewicht | 598 g/Val bas. N |

b) Zu einer Vorlage aus 598 g eines Polyamidamin-Vorproduktes gemäß Beispiel 3a) und 900 ml Wasser fügt man in 25 Minuten 94,1 g Epichlorhydrin zu.
Nach der Zugabe rührt man 30 Minuten bei 30°C nach und erhitzt dann auf 70°C.
Bei steigender Viskosität verdünnt man mit 1250 ml Wasser und stellt den pH-Wert mit NaOH auf 10 ein. Nun rührt man bei 50-55°C und pH: 10 so lange weiter, bis die gewünschte Viskosität erreicht ist. Mit Hilfe einer Schwefelsäure-Lösung wird der pH-Wert dann auf pH: 2,7 eingestellt.

| | |
|---|---|
| Viskosität | 56 mPas (25°C) |
| Feststoffgehalt | 15,0 Gew.-% |
| organ. Cl-Gehalt | 0,11 %. |

### Anwendungsbeispiele

4) Beispiel zur Bestimmung der Naßbruchlast
Gebleichter Kiefernsulfit-Zellstoff wird bei einer Stoffdichte von 2,5 % im Holländer auf einen Mahlgrad von 38° Schopper-Riegler gemahlen. Hiervon werden 100 g in ein Becherglas gegeben und mit Wasser auf 1.000 ml verdünnt.
2 bzw. 4 Gew.-% des erfindungsgemäßen Produktes (15 Gew.-% Feststoff) werden, auf Faserstoff bezogen, in das Becherglas gegeben. Nach einer Rührdauer von 3 Minuten werden mit den Inhalten der Bechergläser auf einem Blattbildner (Rapid-Köthen-Gerät) Papierblätter mit einem Flächengewicht von ca. 80 g/m² gebildet. Die Papierblätter werden bei 90°C 6 Minuten im Vakuum bei einem Druck von 26,66 mbar getrocknet und im Trockenschrank noch 15 Minuten auf 110°C nacherhitzt.
Aus jedem Papierblatt werden nach der Klimatisierung 5 Prüfstreifen von 1,5 cm Breite ausgeschnitten und 5 Minuten in destilliertes Wasser eingetaucht. Danach werden die nassen Streifen in eine Zugprüfmaschine eingespannt und die Naßbruchlasten bestimmt.
Die erhaltenen Ergebnisse sind in der folgenden Tabelle wiedergegeben.

| Beispiele | Naßbruchlast (Newton) Einsatzmenge | |
|---|---|---|
| | 2 % | 4 % |
| 1 b | 9,2 | 13,1 |
| 2 b | 9,8 | 14,4 |
| 3 b | 9,3 | 13,8 |

5) Beispiel zur Bestimmung des AOX-Gehaltes* im Abwasser
a) Zellstoff
2 g Zellstoff werden in einem Becherglas mit 1.000 ml Wasser versetzt und durch Rühren homogen aufgeschlagen. Danach wird 1 Stunde bei Raumtemperatur nachgerührt und dann wird das Wasser durch Filtration sauber vom Stoff abgetrennt.
Für die AOX-Bestimmung wird das Wasser mit HNO₃ conz. auf pH: 2,0 eingestellt und in dieser Form untersucht.

| | |
|---|---|
| AOX-Wert: | 0,206 mg/l |

b) Zellstoff plus Naßfestmittel
2 g Zellstoff werden analog zu a) vorbehandelt; vor der Filtration fügt man 3,0 Gew.-% eines Naßfestmittels gemäß Beispiel 1b) (bezogen auf Faserstoff) zu und rührt die wäßrige Suspension 10 Minuten bei Raumtemperatur. Anschließend wird analog zu a) abfiltriert und angesäuert.

| | |
|---|---|
| AOX-Wert (gesamt): | 0,270 mg/l |
| AOX-Wert (-Zellstoff): | 0,064 mg/l |

* Die Bestimmung erfolgte nach DIN 38049 [Deutsche Einheitsverfahren zur Wasser-, Abwasser- und Schlammuntersuchung. Summarische Wirkungs- und Stofftrenngrößen (Gruppe H), Bestimmung der adsorbierbaren organisch gebundenen Halogene (AOX)].

## Patentansprüche

1. Kationaktive, vernetzbare Polyamidamin-Harze, die durch Umsetzung von
A) einem wasserlöslichen Polyamidamin, mit Basenäquivalentgewichten von 450 bis 1,000 und einem Molekulargewicht von mindestens 800, hergestellt aus
1) aliphatischen gesättigten oder olefinisch ungesättigten oder aromatischen Dicarbonsäuren mit 2 bis 12 C-Atomen oder deren Anhydriden, Estern oder Halbestern und gegebenenfalls 3 bis 6 C-Atomen enthaltende ω-Aminocarbonsäuren oder deren Lactamen
und
2) einen Polyamin-Gemisch aus
α) Polyaminen der Formeln 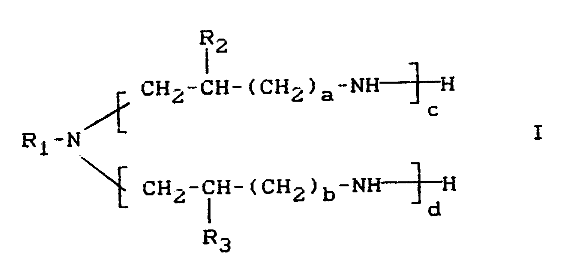 und gegebenenfalls 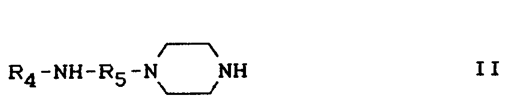 im Molverhältnis von
I:II = 4-100:0-1,
und
β) Polyaminen der Formel 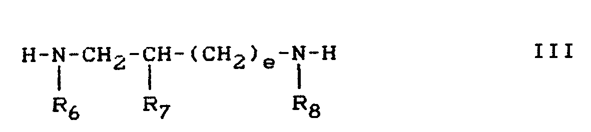 worin
R₁, R₆ und R₈ unabhängig voneinander für Wasserstoff oder C₁-C₄-Alkyl,
R₂, R₃, R₄ und R₇ unabhängig voneinander für Wasserstoff, Methyl oder Ethyl,
R₅ für C₂-C₄-Alkylen,
a, b und e unabhängig voneinander für eine ganze Zahl von 0 bis 4 und
c und d unabhängig voneinander für eine ganze Zahl von 1 bis 6 stehen,
im Molverhältnis von
α:β = 1-25:1
im Molverhältnis von
1:2 = 0,8-1,2:1,
mit
B) einem Epihalogenhydrin und gegebenenfalls gleichzeitige oder anschließende Umsetzung mit einem Polyamin A2) im Molverhältnis von 0,7 bis 3,5 Mol Epihalogenydrin pro Mol Basenstickstoff der Komponente A),
gleichzeitiger oder nachfolgender Umsetzung mit
C) einer anorganischen Base im Molverhältnis von 0,2 bis 2,0 Mol Base pro Mol Epihalogenhydrin-Gruppe, bei einer Temperatur von 15 bis 95°C, unter Einstellung eines pH-Wertes von 8 bis 14
und anschließender Umsetzung des erhaltenen Produktes mit
D) 0,2 bis 9,0 Mol einer halogenfreien Mineral- oder Carbonsäure, bzw. einem sauer reagierenden Derivat dieser Säuren, pro Mol Basenstickstoff der Komponente A, bei einer Temperatur von 15 bis 95°C, wobei mindestens so viel Säure zugefügt wird, daß ein pH-Wert von maximal 5 erreicht wird,
erhältlich sind.

2. Kationaktive, vernetzbare Polyamidamin-Harze nach Anspruch 1, die ein als Gewichtsmittel bestimmtes Molekulargewicht von 2.000 bis 200.000 aufweisen.

3. Kationaktive, vernetzbare Polyamidamin-Harze nach Anspruch 1, deren 5 bis 30 gew.-%ige wäßrige, gegebenenfalls ein polares Lösungsmittel enthaltende Lösung oder Emulsion eine Viskosität von 15 bis 300 mPas bei 25°C aufweist.

4. Kationaktive, vernetzbare Polyamidamin-Harze nach Anspruch 1, bei deren Herstellung als Basen LiOH, Ca(OH)₂, Ba(OH)₂, Sr(OH)₂, Na₂CO₃, K₂CO₃, Na₃PO₄, K₃PO₄, KOH und/oder NaOH verwendet werden.

5. Kationaktive, vernetzbare Polyamidamin-Harze nach Anspruch 1, bei deren Herstellung als halogenfreie Mineral- oder Carbonsäure, bzw. als sauer reagierendes Derivat dieser Säuren, Amidosulfonsäure, schweflige Säure, Salpetersäure, Schwefelsäure, Phosphorsäure, Alkalihydrogensulfate, Essigsäure, Essigsäureanhydrid, Propionsäure, Oxalsäure, Malonsäure, Bernsteinsäure, Glutarsäure, Adipinsäure, Ameisensäure, Äpfelsäure und/oder Citronensäure oder Gemische hieraus verwendet werden.

6. Kationaktive, vernetzbare Polyamidamin-Harze nach Anspruch 1, die als 15 gew.-%ige wäßrige, gegegebenenfalls ein polares Lösungsmittel enthaltende Lösung oder Emulsion einen organischen Halogen-Gehalt von 0,01 bis 0,5 Gew.-% aufweisen.

7. Verfahren zur Herstellung kationaktiver, vernetzbarer Polyamidamin-Harze, dadurch gekennzeichnet, daß man gemäß Anspruch 1 vorgeht.

8. Verfahren zur Behandlung von Papier, dadurch gekennzeichnet, daß man wasserlösliche, vernetzbare Polyamidamin-Harze nach Anspruch 1 verwendet.

9. Naßfestmittel für Papier, dadurch gekennzeichnet, daß sie wasserlösliche, vernetzbare Polyamidamin-Harze nach Anspruch 1 enthalten.

## Claims

1. Cationic crosslinkable polyamidoamine resins which are obtainable by reaction of
A) a water-soluble polyamidoamine having base equivalent weights of 450 to 1,000, and a molecular weight of at least 800 and prepared from
1) aliphatic saturated or olefinically unsaturated or aromatic dicarboxylic acids having 2 to 12 C atoms or anhydrides, esters or half-esters thereof, and ω-aminocarboxylic acids containing 3 to 6 C atoms or lactams thereof,
and
2) a polyamine mixture of
α) polyamines of the formulae 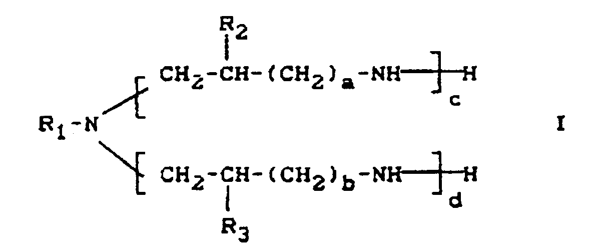 and if appropriate 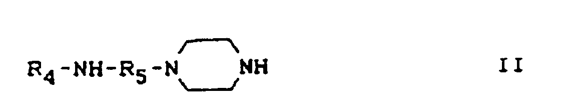 in a molar ratio of I:II = 4-100:0-1,
and
β) polyamines of the formula 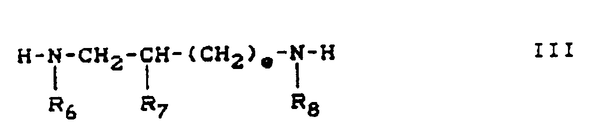 wherein
R₁, R₆ and R₈ independently of one another represent hydrogen or C₁-C₄-alkyl,
R₂, R₃, R₄ and R₇ independently of one another represent hydrogen, methyl or ethyl,
R₅ represents C₂-C₄-alkylene,
a, b and e independently of one another represent an integer from 0 to 4 and
c and d independently of one another represent an integer from 1 to 6,
in a molar ratio of α:β = 1-25:1, and
in a molar ratio of 1:2 = 0.8-1.2:1,
with
B) an epihalogenohydrin, and if appropriate simultaneous or subsequent reaction with a polyamine A2) in a molar ratio of 0.7 to 3.5 mol of epihalogenohydrin per mol of basic nitrogen in component A),
simultaneous or subsequent reaction with
C) an inorganic base, in a molar ratio of 0.2 to 2.0 mol, of base per mol of epihalogenohydrin group, at a temperature of 15 to 95°C, with setting of a pH of 8 to 14
and subsequent reaction of the product obtained with
D) 0.2 to 9.0 mol of a halogen-free mineral or carboxylic acid, or an acidic derivative of these acids per mol of basic nitrogen in component A, at a temperature of 15 to 95°C, at least sufficient acid being added that a pH of at most 5 is achieved.

2. Cationic crosslinkable polyamidoamine resins according to Claim 1, which have a weight-average molecular weight of 2,000 to 200,000.

3. Cationic crosslinkable polyamidoamine resins according to Claim 1, the 5 to 30% strength by weight aqueous solution or emulsion of which, if appropriate containing a polar solvent, has a viscosity of 15 to 300 mPas at 25°C.

4. Cationic crosslinkable polyamidoamine resins according to Claim 1, in the preparation of which LiOH, Ca(OH)₂, Ba(OH)₂, Sr(OH)₂, Na₂CO₃, K₂CO₃, Na₃PO₄, K₃PO₄, KOH and/or NaOH are used as bases.

5. Cationic crosslinkable polyamidoamine resins according to Claim 1, in the preparation of which sulphurous acid, nitric acid, sulphuric acid, phosphoric acid, alkali metal hydrogen sulphates, acetic acid, acetic anhydride, propionic acid, oxalic acid, malonic acid, succinic acid, glutaric acid, adipic acid, formic acid, malic acid and/or citric acid or mixtures thereof are used as the halogen-free mineral or carboxylic acid or as the acidic derivative of these acids.

6. Cationic crosslinkable polyamidoamine resins according to Claim 1, which as a 15% strength by weight aqueous solution or emulsion, if appropriate containing a polar solvent, have an organic halogen content of 0.01 to 0.5% by weight.

7. Process for the preparation of cationic crosslinkable polyamidoamine resins, characterized in that the procedure is according to Claim 1.

8. Process for the treatment of paper, characterized in that water-soluble crosslinkable polyamidoamine resins according to Claim 1 are used.

9. Agents for imparting wet strength to paper, characterized in that they contain water-soluble crosslinkable polyamidoamine resins according to Claim 1.

## Revendications

1. Résines polyamide-amines cationiques réticulables qui peuvent être obtenues par réaction de
A) une polyamide-amine soluble dans l'eau ayant une masse par équivalent de base de 450 à 1000 et une masse moléculaire d'au moins 800, préparée à partir
1) d'acides dicarboxyliques aliphatiques saturés ou à insaturation oléfinique ou aromatiques de 2 à 12 atomes de carbone ou de leurs anhydrides, esters ou hémiesters, et éventuellement d'acides ω-aminocarboxyliques contenant 3 à 6 atomes de carbone ou de leurs lactames
et
2) d'un mélange de polyamines constitué par
α) des polyamines de formules 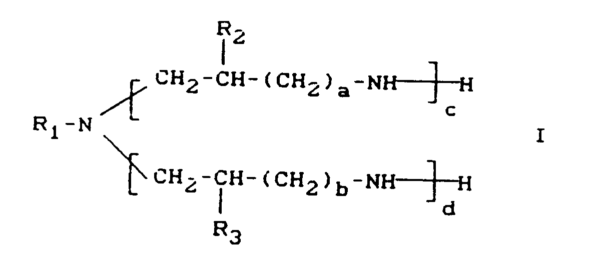 et éventuellement 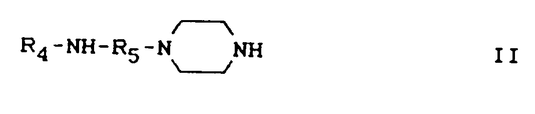 dans un rapport molaire de I:II = 4-100:0-1;
et
β) des polyamines de formule 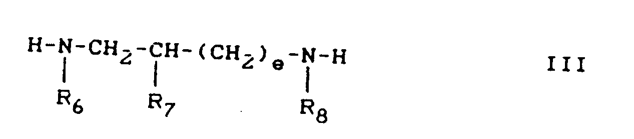
où
R₁, R₆ et R₈ représentent indépendamment l'un de l'autre un hydrogène ou un alkyle en C₁-C₄,
R₂, R₃, R₄ et R₇ représentent indépendamment l'un de l'autre un hydrogène, un méthyle ou un éthyle,
R₅ représente un alkylène en C₂-C₄
a, b et e sont indépendamment l'un de l'autre un nombre entier de 0 à 4, et
c et d sont indépendamment l'un de l'autre un nombre entier de 1 à 6,
dans un rapport molaire de α:β = 1-25:1
dans un rapport molaire de 1:2 = 0,8-1,2:1,
avec
B) une épihalogénhydrine et éventuellement réaction simultanée ou subséquente avec une polyamine A2) dans un rapport molaire de 0,7 à 3,5 moles d'épihalogénhydrine par mole d'azote basique du constituant A),
réaction simultanée ou subséquente avec
C) une base inorganique dans un rapport molaire de 0,2 à 2,0 moles de base par mole de groupe épihalogénhydrine, à une température de 15 à 95°C, avec ajustement du pH à une valeur de 8 à 14
et réaction subséquente du produit obtenu avec
D) 0,2 à 9,0 moles d'un acide minéral ou carboxylique ne contenant pas d'halogène, ou d'un dérivé à réaction acide de cet acide, par mole d'azote basique du constituant A, à une température de 15 à 95°C, l'acide étant ajouté en une quantité au moins suffisante pour que la valeur maximale du pH soit de 5.

2. Résines polyamide-amines cationiques réticulables selon la revendication 1, qui ont une masse moléculaire déterminée en tant que masse moyenne de 2 000 à 200 000.

3. Résines polyamide-amines cationiques réticulables selon la revendication 1, dont la solution ou l'émulsion aqueuse à 5 à 30 % en masse, contenant éventuellement un solvant polaire, a une viscosité de 15 à 300 mPas à 25°C.

4. Résines polyamide-amines cationiques réticulables selon la revendication 1, pour la préparation desquelles on utilise comme bases LiOH, Ca(OH)₂, Ba(OH)₂, Sr(OH)₂, Na₂CO₃, K₂CO₃, Na₃PO₄, K₃PO₄, KOH et/ou NaOH.

5. Résines polyamide-amines cationiques réticulables selon la revendication 1, pour la préparation desquelles on utilise comme acide minéral ou carboxylique ne contenant pas d'halogène, ou comme dérivé à action acide de ces acides, l'acide amidosulfonique, l'acide sulfureux, l'acide nitrique, l'acide sulfurique, l'acide phosphorique, des hydrogénosulfates alcalins, l'acide acétique, l'anhydride acétique, l'acide propionique, l'acide oxalique, l'acide malonique, l'acide succinique, l'acide glutarique, l'acide adipique, l'acide formique, l'acide malique et/ou l'acide citrique ou leurs mélanges.

6. Résines polyamide-amines cationiques réticulables selon la revendication 1 qui, sous forme de solution ou d'émulsion aqueuse à 15 % en masse, contenant éventuellement un solvant polaire, présentent une teneur en halogène organique de 0,01 à 0,5 % en masse.

7. Procédé de préparation de résines polyamide-amines cationiques réticulables, caractérisé en ce que l'on procède selon la revendication 1.

8. Procédé de traitement de papier, caractérisé en ce que l'on utilise des résines polyamide-amines réticulables solubles dans l'eau selon la revendication 1.

9. Agents de résistance à l'état humide pour papier, caractérisés en ce qu'ils contiennent des résines polyamide-amines réticulables solubles dans l'eau selon la revendication 1.
